# DEMANDE DE BREVET EUROPEEN

(11) **EP 0 871 041 A1**
(43) Date de publication de la demande: **14.10.1998**
(21) Numéro de dépôt: 98400905.0
(22) Date de dépôt: 10.04.1998
(51) Int. Cl.: G01S 7/48, G01S 3/781

(54) **Système de détection d'impulsion laser**

(30) Priorité: 11.04.1997 FR 9704474
(71) Demandeur: THOMSON-CSF, 75008 Paris (FR)
(72) Inventeur: Audier, Marcel-Francis, Thomson-CSF Prop. Intel., 94117 Arcueil cedex (FR); Delon, Michel, Thomson-CSF Prop. Intel., 94117 Arcueil cedex (FR)
(74) Mandataire: Benoit, Monique

(57) **Abrégé**

La présente invention se rapporte à un système de détection d'impulsions laser utilisé pour faire de l'écartométrie laser. L'impulsion laser traquée est une impulsion de faible amplitude et de très faible durée. Les fonctions spatiales et temporelles sont réparties entre deux détecteurs, un capteur auxiliaire rapide dont la rapidité de réponse permet d'identifier l'instant précis d'arrivée de l'impulsion et une matrice de cellules de détection dont les temps d'intégration au niveau de ses cellules de détection sont très courts (de l'ordre de quelques microsecondes), et dont les périodes aveugles correspondant à la remise à zéro de ces cellules de détection sont masquées par l'utilisation d'un double niveau de mémoires tampon (12, 29) découplées entre elles. Le système, basé sur une conception hybride n'utilise pas de cellules de détection CCD en silicium.

## Description

La présente invention se rapporte à un système de détection d'impulsions laser notamment utilisé pour faire de l'écartométrie laser.

On connaît des systèmes de détection d'impulsion laser qui sont des détecteurs dits "quatre quadrants", dont le principe consiste à former une tache au centre d'un détecteur séparé en quatre quadrants et à comparer les intensités reçues par chacun des quadrants respectifs. Ces détecteurs présentent plusieurs défauts. D'abord il est difficile d'obtenir une répartition homogène de la tâche laser. Différentes causes peuvent expliquer cette difficulté : par exemple l'inhomogénéité de la surface sur laquelle se réfléchit le rayon laser, est à l'origine de problèmes d'albédo ; les aberrations de l'optique du détecteur ainsi que la qualité variable de la transmission atmosphérique contribuent également à détériorer le signal lumineux reçu. Ensuite, la sensibilité du détecteur est mauvaise à cause de la trop faible quantité d'énergie récupérée par celui-ci ; on peut pallier cet inconvénient en utilisant un objectif de grande focale qui est cependant très coûteux.

On a également proposé des systèmes de détection d'impulsion laser qui sont des détecteurs matriciels dits "à tapis roulant", comme décrits dans la demande de brevet français n°9512718. Ils ont de meilleures performances et en particulier ils sont moins sensibles au bruit de fond, ce qui permet une détection plus précise de la position de la tache laser, mais ces détecteurs ont aussi des limitations. Le transfert de l'information effectué par les cellules CCD du détecteur est lent. En effet, le temps d'intégration d'une cellule CCD est de l'ordre de quelques centaines de microsecondes, ce qui porte le temps d'intégration total à une dizaine de millisecondes, imposant ainsi des fréquences d'utilisation inférieures au kilohertz ; une solution partielle consiste à multiplier le nombre de sorties vidéo du détecteur. Or le silicium possède un rendement quantique aux longueurs d'onde utilisées, à savoir λ=1,06µm et λ =1,56µm, qui est assez faible. La détection n'est alors possible en pratique que dans le visible ou dans le proche infrarouge.

Les problèmes de l'art antérieur peuvent se résumer comme suit : temps d'intégration d'une cellule CCD long, et faible rendement quantique du silicium aux longueurs d'onde utilisées. L'invention se propose de résoudre ces problèmes. Le mode «tapis roulant» étant trop lent, l'invention se propose de fonctionner selon un mode « statique », ce qui va réintroduire le problème de la période aveugle correspondant à la remise à zéro des cellules élémentaires de détection, problème que le mode tapis roulant avait supprimé. Cette période aveugle peut être particulièrement gênante dans certaines applications où la durée de l'impulsion laser est très courte.

Pour cela le système de détection de l'invention opère avec des temps d'intégration au niveau de ses cellules élémentaires qui sont très courts (de l'ordre de quelques microsecondes), n'utilise pas de cellules CCD (donc pas de silicium pour la réalisation de la fonction détection), et permet de masquer la période aveugle correspondant à la remise à zéro de ses cellules élémentaires (en utilisant un double niveau de mémoires tampon découplées entre elles).

L'invention est un système de détection d'impulsion laser, comportant des premiers moyens permettant de signaler la présence de l'impulsion laser et des deuxièmes moyens permettant de détecter l'image de l'impulsion laser, les deuxièmes moyens comportant au moins une cellule de détection, le système étant caractérisé en ce :
- que la cellule comporte une séquence de trois blocs pouvant être découplés les uns des autres par des interrupteurs ; le premier bloc comportant un détecteur élémentaire de signal lumineux associé à une mémoire tampon provisoire, le deuxième bloc comportant une mémoire tampon, le troisième bloc comportant un moyen de lecture ; le premier interrupteur reliant les premier et deuxième blocs, le deuxième interrupteur reliant les deuxième et troisième blocs ; les blocs étant couplés lorsque l'interrupteur qui les relie est dans l'état fermé, étant découplés lorsque cet interrupteur est dans l'état ouvert ;
- que l'impulsion laser à détecter est un signal lumineux véhiculant de l'information, accompagné de bruit du type qui augmente avec le temps d'intégration du premier bloc, le temps d'intégration du premier bloc étant suffisamment court pour que le rapport signal à bruit soit acceptable, mais au moins égal à la durée de l'impulsion laser;
- qu'un cycle de détection de la cellule de détection comporte plusieurs phases :
   - que lors de la première phase, le premier interrupteur étant déjà dans l'état ouvert, le signal lumineux reçu par le détecteur élémentaire est intégré dans la mémoire tampon provisoire ;
   - que lors de la deuxième phase qui débute par la fermeture du premier interrupteur, celle-ci se produisant en cas de détection d'impulsion laser sur commande des premiers moyens ou à la fin du temps d'intégration en cas d'absence de détection d'impulsion laser, le deuxième interrupteur étant déjà dans l'état ouvert, la mémoire tampon provisoire vide l'information qu'elle contient dans la mémoire tampon, ce qui a pour effet de simultanément remettre à zéro la mémoire tampon provisoire, et qu'un signal lumineux, arrivant sur le détecteur élémentaire pendant cette deuxième phase, s'ajoute alors directement au contenu de la mémoire tampon ;
   - que lors d'une troisième phase qui se produit dans le cas où une impulsion laser a été détectée par les premiers moyens et qui débute par la fermeture du deuxième interrupteur, le contenu de la mémoire tampon est lu par le moyen de lecture ;
   - que lors d'une quatrième phase, intervenant après la deuxième phase ou après la troisième phase lorsque celle-ci existe, le premier interrupteur étant déjà dans l'état ouvert, la mémoire tampon est remise à zéro.
   - que depuis l'ouverture du premier interrupteur, survenant entre la fin de la deuxième phase et le début de la quatrième phase, jusqu'à la fin de la première phase du cycle suivant, le signal lumineux reçu par le détecteur élémentaire est intégré dans la mémoire tampon provisoire.

Dans un mode de réalisation préférentiel de l'invention, l'information véhiculée par le signal lumineux reçu par le détecteur élémentaire produit sous l'effet du signal lumineux des charges électriques qui sont stockées dans les mémoires et qui sont transférables d'un bloc à un autre par l'intermédiaire des interrupteurs.

Dans ce mode de réalisation préférentiel de l'invention :
- par exemple, il existe une différence de potentiel entre la mémoire tampon et la mémoire tampon provisoire qui vient avantageusement de ce que le potentiel d'entrée de la mémoire tampon est une masse virtuelle.
- la mémoire tampon provisoire est de préférence la capacité parasite située aux bornes du détecteur élémentaire.
- le système comporte avantageusement plusieurs cellules de détection dont les détecteurs élémentaires sont arrangés de préférence sous forme de matrice et plus précisément avantageusement sous la forme d'une matrice de diodes fonctionnant en mode photovoltaïque, ce qui permet de diminuer le bruit électronique qui dégrade l'information.
- la matrice est de préférence réalisée avec un matériau adapté à la longueur d'onde de l'impulsion laser, ce permet d'obtenir un rendement quantique optimisé.
- les deuxièmes moyens comportent avantageusement un capteur auxiliaire rapide qui déclenche la sommation du signal en cours d'intégration dans les détecteurs élémentaires avec le contenu des mémoires tampon qui leur sont associées.

L'invention sera mieux comprise et d'autres caractéristiques et avantages apparaîtront à l'aide de la description ci-après et des dessins joints où :
- la figure 1 montre une cellule de détection selon l'invention.
- la figure 2 montre un mode de réalisation particulier de la figure 1.
- les figures 3A à 3F sont des diagrammes explicatifs du fonctionnement du système de la figure 2.

Les dessins et la description sont donnés à titre d'exemple et considérés comme non limitatifs.

Le domaine de l'invention est celui de l'écartométrie laser. Cette technique permet de déterminer l'écart angulaire entre l'axe de la ligne de visée d'un appareil appelé écartomètre et la direction d'un point éloigné illuminé par un laser. Ce point illuminé est appelé une cible. Ces systèmes d'écartométrie sont principalement utilisés dans des équipements militaires comme les autodirecteurs de missiles guidés par laser, mais également dans d'autres systèmes permettant d'acquérir une cible désignée par laser.

L'impulsion laser traquée peut être une impulsion de faible amplitude et de très faible durée ; l'énergie totale véhiculée par cette impulsion est alors faible, et risque d'être noyée dans le bruit. Les sources de bruit sont tous les signaux lumineux autres que l'impulsion laser, en particulier les rayons solaires le jour. L'autre caractéristique essentielle de cette impulsion est d'être imprévisible, ce qui oblige le système de veille à fonctionner en continu, c'est à dire sans période aveugle. Habituellement, cette impulsion présente néanmoins la caractéristique importante d'être faiblement récurrente, ce qui permet d'assouplir certaines contraintes. En effet, les signaux peuvent arriver sur le détecteur à tout moment, mais ils arriveront de manière relativement espacée, donc ils n'imposeront pas au traitement du signal situé en aval du détecteur, assurant les fonctions de stockage et d'exploitation, une cadence trop élevée.

Si l'on veut détecter une impulsion laser, c'est pour pouvoir en extraire des informations. La fonction de détection est donc toujours suivi d'une fonction de traitement du signal détecté effectuée par le circuit de lecture situé en aval. Dans le système de l'invention, les deux fonctions sont de préférence séparées et optimisées séparément, l'invention concernant plus particulièrement l'aspect détection. La localisation de la tâche laser se fait dans trois dimensions constituées par le plan du détecteur et par le temps. Les systèmes usuels ne parvenant pas à fonctionner avec un seul détecteur, on procède à la répartition entre deux détecteurs, des fonctions spatiales et temporelles. La cible est désignée de préférence par un illuminateur annexe qui peut soit être intégré au système de détection, soit être indépendant. Les informations temporelles permettant d'identifier l'illuminateur, lorsque celui-ci émet des impulsions codées par exemple, sont extraites par exemple grâce à un capteur indépendant dont la rapidité de réponse permet d'identifier l'instant précis d'arrivée de l'impulsion ; habituellement ce capteur est un petit élément ne remplissant que cette fonction d'identification. Ce capteur auxiliaire rapide met alors en place un nouveau mode de gestion de la matrice de détecteurs élémentaires qui va déclencher le transfert du signal en cours d'intégration dans les détecteurs élémentaires vers le contenu des mémoires tampon qui leur sont associées. Ainsi, toute perte d'information éventuellement due à la lenteur de réaction de la logique de gestion de la matrice de détecteurs élémentaires est évitée. De manière connue, chaque cellule de détection est couplée à un circuit d'entrée du circuit de lecture, qui assure pour cette cellule de détection, les fonctions de polarisation, d'intégration du signal photoélectrique et de multiplexage pour la formation d'un signal vidéo qui sera lu par le circuit de lecture situé en aval de la cellule de détection.

Dans certaines applications, notamment pour les longueurs d'onde de 1,06µm et 1,56µm, les cellules de détection CCD sont peu adaptées. En effet, à 1,06µm le silicium possède un rendement quantique de l'ordre du pour-cent, et à 1,56µm il est encore inférieur. Par conséquent, à ces longueurs d'onde, on préfère utiliser des matrices de détecteurs élémentaires réalisées sur des substrats en lnGaAs, InSb, HgCdTe dont les longueurs d'onde d'utilisation limites sont respectivement λ=1,8µm, λ=5µm, λ=12µm. Selon le degré de performances recherché, ces détecteurs élémentaires peuvent fonctionner en étant fortement, peu ou pas refroidis, sauf ceux utilisant des substrats en lnSb qui doivent toujours être refroidis. Aux grandes longueurs d'onde, c'est à dire dans l'infrarouge lointain, les substrats employés seront de préférence HgCdTe ou AsGa ; le refroidissement devient alors obligatoire quelque soit le substrat employé , car le gap diminuant, le gap étant l'écart entre le niveau d'énergie de la bande de valence et le niveau d'énergie de la bande de conduction du substrat considéré, le bruit thermique a tendance à augmenter.

La matrice de détecteurs élémentaires est réalisée avec le matériau semi-conducteur le mieux adapté à la longueur d'onde de l'impulsion laser traquée. Dans un mode de réalisation préféré, la partie traitement du signal en aval reste réalisée avec des composants classiques en silicium. Cela conduit à une architecture hybride. L'assemblage des deux composants, matrice de détecteurs élémentaires et circuit de lecture, est par exemple réalisé selon un procédé classique utilisant des billes en indium ou en alliage étain-plomb, permettant d'assurer la liaison mécanique et la continuité électrique entre chaque cellule de détection de la matrice et chaque circuit d'entrée du circuit de lecture. Quant à la matrice de détecteurs élémentaires, sa structure classique vient du domaine de l'imagerie qui joue un rôle moteur dans le développement des mosaïques de détecteurs élémentaires. L'invention propose un fonctionnement de la matrice de détecteurs élémentaires à des longueurs d'onde auxquelles le silicium est peu utilisable.

L'invention permet de réaliser une écartométrie de grande sensibilité grâce à la diminution artificielle du fond de scène, et de détecter avec certitude l'arrivée d'une impulsion laser grâce à la mise en place d'une surveillance continue. L'invention permet donc de s'affranchir du bruit et des périodes aveugles dues aux phases de lecture et/ou de remise à zéro, ce qui va être examiné maintenant.

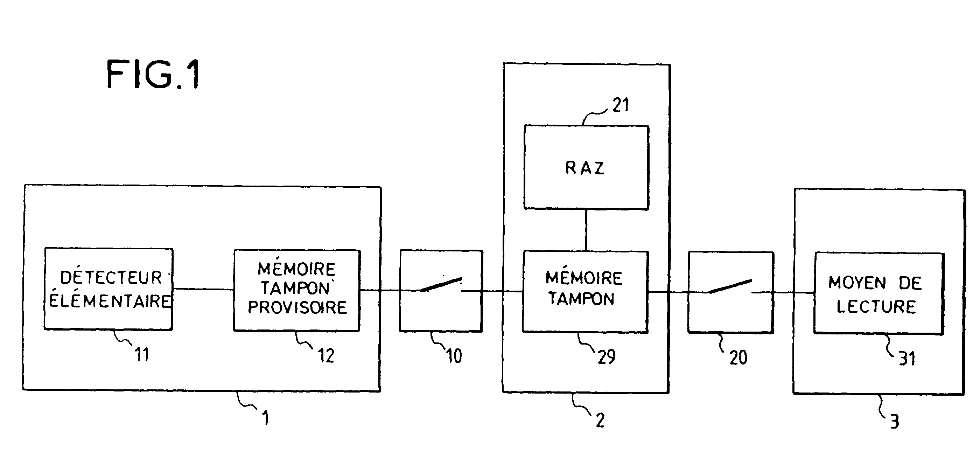

Le schéma d'une cellule de détection selon l'invention est visible sur la figure 1. La cellule de détection comporte une séquence de trois blocs 1,2 et 3, pouvant être découplés les uns des autres par deux interrupteurs 10 et 20. Partout dans le brevet, lorsqu'on emploie le terme «interrupteur», il s'agit de la «fonction interrupteur» qui peut être réalisée de diverses manières, par exemple à l'aide d'un dispositif à transistors connu classiquement. Le bloc 1 comporte un détecteur élémentaire 11 de signal lumineux associé à une mémoire tampon provisoire 12. Le détecteur élémentaire 11 est par exemple une diode à effet photoélectrique qui reçoit un signal lumineux et le transforme en charges électriques. Le signal lumineux reçu, non représenté ici, se compose de bruit notamment généré par le fond de scène et d'information contenue dans l'impulsion laser. La mémoire tampon provisoire 12 est avantageusement formée par la capacité parasite située aux bornes du détecteur élémentaire 11, cette capacité étant constituée de la capacité propre du détecteur élémentaire augmentée de la capacité d'entrée de l'intégrateur. Le bloc 2 comporte une mémoire tampon 29 et un système de remise à zéro (RAZ) 21 de cette mémoire tampon 29. Lorsque ce système de RAZ 21 est inactif, il n'a aucun effet sur la mémoire tampon 29 ; lorsque ce système de RAZ 21 est actif, la mémoire tampon 29 est remise à zéro. Le bloc 3 comporte un moyen de lecture 31 classique non représenté ici. L'interrupteur 10 relie les blocs 1 et 2, l'interrupteur 20 relie les blocs 2 et 3. Les blocs sont couplés lorsque l'interrupteur qui les relie est dans l'état fermé, sont découplés lorsque cet interrupteur est dans l'état ouvert.

L'opération de détection comporte plusieurs cycles chacun comportant plusieurs phases séquentielles qui ne se recouvrent pas.

La fermeture et l'ouverture de l'ensemble des interrupteurs sont commandés par des moyens de commande classiques.

Lors de la première phase, la mémoire tampon 29 est vide, les interrupteurs 10 et 20 sont dans l'état ouvert. Le détecteur élémentaire 11 transforme en charges électriques le signal lumineux qu'il reçoit. Ces charges électriques sont stockées dans la mémoire tampon provisoire 12.

La deuxième phase débute avec la fermeture de l'interrupteur 10. Cette fermeture va être déclenchée dans deux cas. Le premier cas est celui où le capteur auxiliaire rapide, non représenté ici car de préférence extérieur à la cellule de détection, ayant détecté l'arrivée d'une impulsion laser, avertit la cellule de détection à l'aide de moyens classiques non représentés ici. Le deuxième cas est celui où la durée préfixée du temps d'intégration s'est écoulée sans que le capteur auxiliaire rapide n'aie averti la cellule de détection, de l'arrivée d'une impulsion laser. Au moment où l'interrupteur 10 se ferme, il existe une différence de potentiel entre la mémoire tampon provisoire 12 et la mémoire tampon 29 à cause des charges électriques qui, provenant du signal lumineux reçu par le détecteur élémentaire 11, ont été stockées dans la mémoire tampon provisoire 12. De préférence, le potentiel de la mémoire tampon provisoire 12 varie en fonction du contenu de celle-ci, alors que le potentiel d'entrée de la mémoire tampon 29 reste fixe quelque soit le contenu de celle-ci. Grâce à cette différence de potentiel, la mémoire provisoire 12 vide l'information qu'elle contient dans la mémoire tampon 29. La mémoire tampon provisoire 12 est à nouveau vide après cette opération de lecture qui a donc eu pour effet simultané une opération de remise à zéro de la mémoire tampon provisoire 12. Le signal lumineux arrivant sur le détecteur élémentaire 11 pendant cette deuxième phase est transformé en charges électriques qui vont directement dans la mémoire tampon 29 tant que l'interrupteur 10 est dans l'état fermé. Préférentiellement, l'ouverture du premier interrupteur 10 a lieu juste après la lecture de la mémoire tampon provisoire 12 par la mémoire tampon 29, c'est-à-dire à la fin de la deuxième phase.

La troisième phase se produit dans le cas où une impulsion laser a été détectée par le capteur auxiliaire rapide et par conséquent l'information véhiculée par cette impulsion laser est stockée dans la mémoire tampon 29. Le premier interrupteur 10 est, de préférence mais pas obligatoirement, déjà dans l'état ouvert. En effet, l'information étant déjà dans la mémoire tampon 29, seul du bruit provenant du fond de scène peut s'y ajouter, dégradant ainsi cette information ; de plus, dans le cas où surviendrait une deuxième impulsion laser avant l'ouverture de l'interrupteur 10, l'information véhiculée par cette deuxième impulsion laser s'ajouterait à la précédente dans la mémoire tampon 29, provoquant ainsi un "mélange" et par conséquent une perte d'information.

Cette phase débute par la fermeture de l'interrupteur 20. Le moyen de lecture 31 du bloc 3 lit alors l'information contenue dans la mémoire tampon 29. Cette phase est à priori inutile en cas d'absence de détection d'impulsion laser mais elle peut tout de même avoir lieu.

La quatrième phase intervient après la deuxième phase ou après la troisième phase lorsque celle-ci a eu lieu. Le premier interrupteur 10 est déjà dans l'état ouvert. Cette phase débute par l'activation du système de RAZ 21, ce qui remet à zéro la mémoire tampon 29. Celle-ci est alors vide. Le système de RAZ 21 est ensuite désactivé.

Depuis l'ouverture de l'interrupteur 10, survenant à un moment compris entre la fin de la deuxième phase et le début de la quatrième phase, jusqu'à la fin de la première phase du cycle suivant, c'est à dire la durée pendant laquelle cet interrupteur 10 reste dans l'état ouvert, le détecteur élémentaire 11 transforme le signal lumineux qu'il reçoit en charges électriques qui sont stockées dans la mémoire tampon provisoire 12.

Le temps d'intégration est donc le temps qui s'est écoulé entre l'ouverture de l'interrupteur 10, après la fin ou à la fin de la deuxième phase, et la fin de la première phase du cycle suivant. Ce temps d'intégration doit être choisi suffisamment court pour que le bruit ne dégrade pas trop l'information contenue dans le signal lumineux véhiculé par l'impulsion laser reçue par le détecteur élémentaire 11, mais suffisamment long pour pouvoir contenir l'impulsion laser. Le bruit au niveau du signal lumineux est de deux types : le bruit aléatoire qui résulte de phénomènes Poissoniens, et le bruit fixe qui provient des différences d'albédo dans le visible ou des différences de température dans l'infrarouge, des différents points de la scène observée.

Dans les systèmes selon l'art antérieur, le temps d'intégration est couramment de l'ordre de quelques centaines de microsecondes, typiquement 300 µs. La durée de l'impulsion laser est usuellement de l'ordre d'une ou de quelques dizaines de nanosecondes. Une grande partie du temps d'intégration n'amène donc sur les détecteurs élémentaires 11 que du bruit ; il est donc utile voire nécessaire d'essayer de réduire ce temps d'intégration le plus possible. Mais plusieurs phénomènes s'opposent à la diminution du temps d'intégration en dessous d'un certain seuil. La première limite réside dans la durée de l'impulsion laser à détecter, le temps d'intégration ne devant pas être inférieur à la durée de cette impulsion laser. Le temps nécessaire à la remise à zéro du bloc 2 entre deux cycles de détection successifs fixe également une borne inférieure à la durée du temps d'intégration. Par contre, le temps nécessaire à l'extraction du signal vidéo dans la partie traitement du signal située en aval du bloc 3, n'impose pas pour le temps d'intégration de durée minimum ; en effet, l'extraction du signal vidéo n'est pas nécessaire tant qu'aucune arrivée d'information laser n'a été identifiée par le capteur auxiliaire ; cependant ce temps limite la récurrence maximum des impulsions laser pouvant être détectées. D'un autre côté, l'intensité du bruit provenant du fond de scène, qu'il soit d'origine photonique ou bien thermique, impose une durée maximale du temps d'intégration à ne pas dépasser sous peine de noyer dans le bruit l'information contenue dans l'impulsion laser; le bloc 2 joue le rôle d'intégrateur du courant électrique que les détecteurs élémentaires 11 à effet photoélectrique délivrent directement ou par l'intermédiaire des mémoires tampon provisoires 12, et la dynamique de ce bloc 2 fixe aussi une borne maximale à ne pas dépasser pour la durée du temps d'intégration. La durée du temps d'intégration qui sera retenue dépendra plutôt de l'une ou l'autre de ces limitations, selon les particularités du système envisagé. Ainsi, à la fin de la deuxième phase du cycle d'intégration, les mémoires tampon 29 des cellules de détection contiennent une quantité négligeable de charges électriques qui sont issues du bruit de fond de scène, à l'exception des mémoires tampon 29 des cellules de détection dont les détecteurs élémentaires 11 ont reçu l'impulsion laser, dans le cas où le système comporte avantageusement une matrice de cellules de détection. Plus la durée du temps d'intégration est courte, meilleur est le rapport signal à bruit de l'impulsion laser détectée ; donc la probabilité de détection d'impulsions laser de très faible amplitude augmente, et avec elle la portée de l'écartomètre utilisant le système de l'invention aussi.

Les cellules élémentaires de détection selon l'art antérieur présentent en général une ou plusieurs périodes aveugles qui correspondent aux opérations de lecture et/ou de remise à zéro des mémoires tampon associés aux détecteurs élémentaires. Le système selon l'invention permet d'une part de réaliser simultanément les opérations de lecture et de remise à zéro de la mémoire tampon provisoire 12, qui sont toutes les deux réalisées pendant la période correspondant à la deuxième phase du cycle de détection. D'autre part, si une information arrive pendant cette période, il a été vu plus haut que cette information est directement intégrée dans la mémoire tampon 29. Quant aux opérations de lecture et de remise à zéro de la mémoire tampon 29, elles sont effectuées alors que les blocs 1 et 2 sont découplés, donc une information arrivant à ces moments là, peut être intégrée dans la mémoire tampon provisoire 12 sans perturber ni être perturbée par les opérations précitées. La continuité de l'observation du système est donc assurée grâce à ce système de double niveau particulier de mémoires tampon reliées par un interrupteur commandé de manière adaptée.

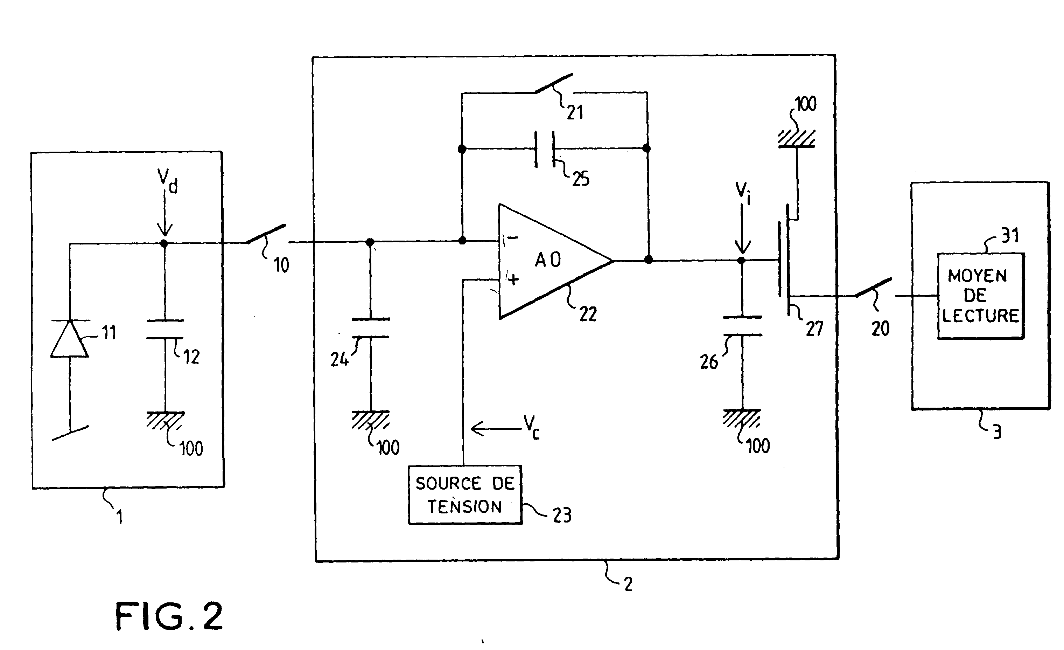

La figure 2 montre une cellule de détection selon l'invention, comportant une réalisation particulière du bloc 2 qui utilise un amplificateur opérationnel comme intégrateur.

Le bloc 2 comporte un interrupteur de RAZ 21, un amplificateur opérationnel (AO) 22, une source de tension constante réglable 23 qui permet au potentiel d'entrée de la mémoire 29 de jouer le rôle de masse virtuelle, la capacité parasite d'entrée 24 de l'AO 22, une capacité d'intégration 25, avantageusement une capacité dite ballaste 26, un transistor à effet de champ 27 ; Vd est la tension aux bornes de la capacité parasite 12, Vi la tension aux bornes de la capacité ballaste 26 , et Vc la tension constante à laquelle est réglée la source de tension 23. Des petits rectangles hachurés 100 représentent des potentiels fixes qui peuvent être la masse. La source de tension 23 branchée sur la borne + de l'AO 22 permet à sa borne - qui est également la borne d'entrée du bloc 2 raccordée à la sortie du bloc 1, de maintenir son potentiel électrique à une valeur constante. La valeur de ce potentiel électrique peut être ajustée par réglage de la source de tension 23. C'est ce qui permet au potentiel d'entrée de la mémoire tampon 29 de la figure 1 de rester fixe, c'est à dire de garder une valeur constante quelque soit le contenu de cette mémoire tampon 29. De plus , l'AO 22 a de préférence un gain et une résistance de fuite qui sont très élevés. Il n'y a donc pratiquement pas de débit en courant, la diode à effet photoélectrique qu'est le détecteur élémentaire 11 fonctionne alors en mode photovoltaïque. Ceci permet de réduire le bruit de type électronique. La capacité d'intégration 25 permet de stocker les charges électriques qui véhiculent l'information. La capacité ballaste 26 sert classiquement à minimiser le bruit de l'AO 22. La tension de grille du transistor à effet de champ 27 est représentative de la quantité de charges électriques stockées au niveau de la capacité d'intégration 25, donc de l'information stockée dans la mémoire tampon 29 de la figure 1. Lors de la fermeture de l'interrupteur 20, le courant, qui passe au niveau de cet interrupteur 20 après avoir traversé le drain et la source du transistor à effet de champ 27, est fonction de la tension de grille de ce transistor 27, donc est représentatif de l'information stockée dans la mémoire tampon 29 de la figure 1.

L'évolution des valeurs des potentiels du circuit électrique de la cellule de détection est décrite sur les diagrammes des figures 3A à 3F. Tous les diagrammes ont le temps en abscisse, l'origine étant prise au temps t₀. En ordonnée, pour les diagrammes représentant des états d'interrupteurs, la valeur haute représente l'état fermé, la valeur basse l'état ouvert ; pour les autres diagrammes, les valeurs représentées soit sont indiquées, soit sont arbitraires et seules les variations de ces valeurs ont une importance.

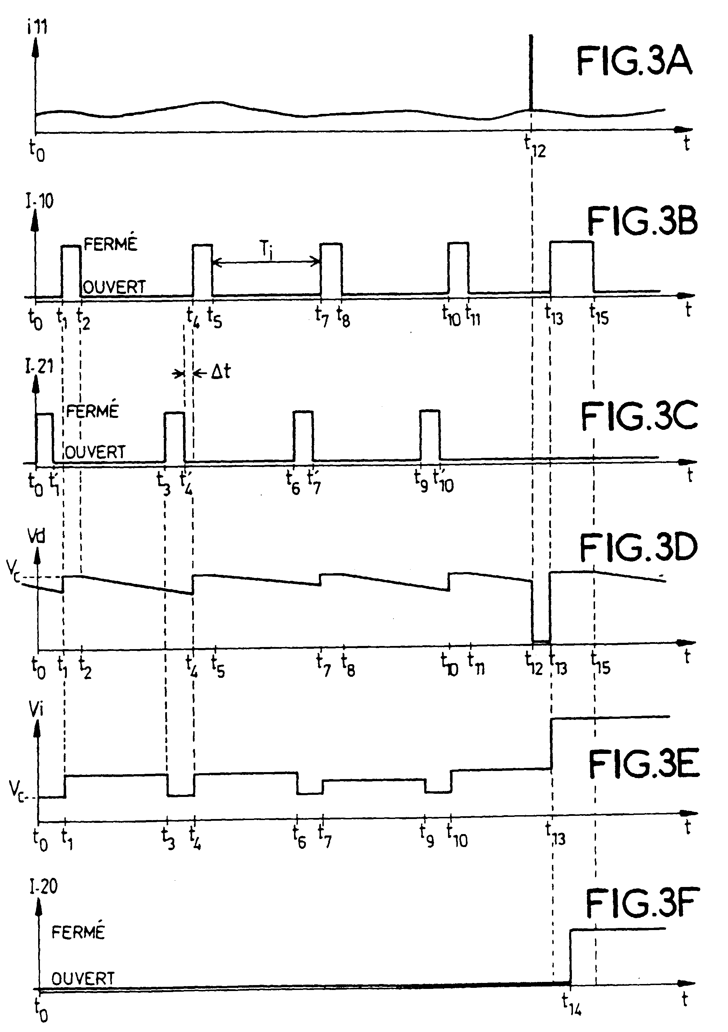

Le diagramme de la figure 3A a en ordonnée le courant photoélectrique i11 débité par la diode à effet photoélectrique 11. Le diagramme de la figure 3B a en ordonnée l'état de l'interrupteur 10, noté I-10. Le diagramme de la figure 3C a en ordonnée l'état de l'interrupteur 21, noté I-21. Le diagramme de la figure 3D a en ordonnée la tension Vd, noté Vd. Le diagramme de la figure 3E a en ordonnée la tension Vi, noté Vi. Le diagramme de la figure 3F a en ordonnée l'état de l'interrupteur 20, noté I-20.

Les diagrammes décrivent la succession de plusieurs cycles de détection en l'absence d'impulsion laser, puis un cycle de détection lors de l'arrivée d'une impulsion laser.

La première phase comprend l'intégration de l'information au niveau de la capacité parasite 12. Elle est réduite au tout petit intervalle de temps Δt qui sépare les temps d'ouverture de l'interrupteur 21 qui sont t'₁, t'₄, t'₇, t'₁₀, des temps de fermeture de l'interrupteur 10 qui sont t₁, t₄, t₇, t₁₀, de manière à ce que le moment d'ouverture de l'interrupteur 21 ne soit pas confondu avec le moment de fermeture de l'interrupteur 10, mais qu'il le précède. Le courant i11 véhicule du bruit de fond de scène, ce qui a pour effet, lorsque l'interrupteur 10 est ouvert, de décharger lentement la capacité parasite 12 dont la tension Vd baisse lentement. La tension Vi reste constante et égale à la valeur Vc.

La deuxième phase comprend le stockage de l'information au niveau de la capacité d'intégration 25 et la recharge de la capacité parasite 12. Elle se déroule pendant l'intervalle de temps compris entre les temps de fermeture de l'interrupteur 10 qui sont t₁, t₄, t₇, t₁₀, t₁₃, et les temps d'ouverture de l'interrupteur 10 qui sont t₂, t₅, t₈, t₁₁, t₁₅. Une impulsion laser considérée comme quasi ponctuelle arrivant au temps t₁₂ déclenche la fermeture de l'interrupteur 10 au temps t₁₃, faisant alors débuter la deuxième phase avant que le temps d'intégration Ti préfixé en cas d'absence d'impulsion laser ne soit écoulé. Le courant i11 véhicule du bruit du fond de scène pour tous les cycles, ajouté pour le dernier cycle à l'information contenue dans l'impulsion laser arrivée à t₁₂. La capacité 12 se recharge, sa tension Vd augmente rapidement pour atteindre la valeur constante Vc. La tension Vi augmente rapidement pour atteindre une valeur constante représentative de l'information stockée au niveau de la capacité d'intégration 25.

La troisième phase débute au temps t₁₄ par la fermeture de l'interrupteur 20, qui permet au moyen de lecture 31 du bloc 3 de "lire" l'information stockée au niveau de la capacité d'intégration 25. Les évolutions des tensions Vd et Vi ne sont pas modifiées.

La quatrième phase de remise à zéro de la mémoire tampon 29 se déroule pendant l'intervalle de temps compris entre les temps de fermeture de l'interrupteur 21 qui sont t₀, t₃, t₆, t₉, et les temps d'ouverture de l'interrupteur 21 qui sont t'₁, t'₄, t'₇, t'₁₀. La capacité d'intégration 25 se décharge, la tension Vi baisse rapidement pour atteindre la valeur constante Vc. Indépendamment, le courant i11 véhicule du bruit du fond de scène, ce qui a pour effet, lorsque l'interrupteur 10 est ouvert, de décharger lentement la capacité parasite 12 dont la tension Vd baisse.

Entre les temps d'ouverture de l'interrupteur 10 qui sont t₂, t₅, t₈, t₁₅, et les temps de fermeture de l'interrupteur 10 qui sont t₄, t₇, t₁₀, et un dernier temps de fermeture de l'interrupteur 10 non représenté ici et postérieur à t₁₅, c'est à dire pendant le temps d'intégration, le courant i11 véhicule du bruit de fond de scène, ce qui a pour effet de décharger lentement la capacité parasite 12 dont la tension Vd baisse lentement. Vi reste constante. Entre les temps t₁₁ et t₁₃, c'est à dire pendant le temps d'intégration, le courant i11 véhicule du bruit de fond de scène au début du temps d'intégration, ce qui a pour effet de décharger lentement la capacité parasite 12 dont la tension Vd baisse lentement ; puis à t₁₂ lorsque l'impulsion laser arrive, la capacité parasite 12 se décharge beaucoup et rapidement entraînant une chute importante et rapide de sa tension Vd : cette chute est représentative de l'information véhiculée par l'impulsion laser. Vi reste constante.

Ainsi, en découpant la période d'observation en cycles d'intégration très courts et en mémorisant temporairement chaque intégration, on intègre un très faible flux de scène et la totalité du flux laser épié. Le système de détection obtenu permet donc d'assurer une surveillance en continu de l'arrivée de l'impulsion laser et de s'affranchir des limitations liées au bruit du fond de scène.

Dans une réalisation préférentielle du système, pour une durée d'impulsion laser de l'ordre de 20ns, le temps d'intégration vaut environ 1µs. La capacité parasite située aux bornes du détecteur élémentaire vaut environ 500fF et la capacité d'intégration vaut environ 1fF. Il en résulte une taille de pixel, c'est à dire de cellule élémentaire de détection, d' environ 30 x 30 µm².

Le moyen de lecture 31 que comporte le bloc 3 est classique, la chaîne de multiplexage des données en aval également. La partie du système en aval du bloc 3 contient une capacité de charge d'environ 2pF à laquelle le transistor 27 sert de circuit tampon, c'est par l'intermédiaire du transistor 27 que la capacité de charge reçoit un courant de valeur adapté. Une lecture du contenu des mémoires tampon 29 par le circuit de lecture qui regroupe l'ensemble des moyens de lecture 31, à cadence fixée par cette partie du système en aval du bloc 3, permet de déterminer la position de la tache laser sur le système de détection, puis de calculer directement l'écartométrie.

Si la fréquence des impulsions laser est élevée, le circuit de lecture doit être suffisamment rapide pour suivre la cadence imposée. Aussi la faible récurrence des impulsions laser est utile sans être nécessaire. Une récurrence élevée des impulsions laser est parfaitement compatible avec un système de détection selon l'invention, il suffit pour cela d'augmenter le nombre de sorties vidéo de la matrice de détecteurs élémentaires. Ce circuit de lecture est réalisé en utilisant la technologie Silicium CMOS pour les systèmes de détection fortement refroidis et la technologie bipolaire ou BICMOS pour les autres. L'utilisation de la technologie Silicium bipolaire permet d'obtenir un circuit de lecture plus rapide, mais elle ne fonctionne pas aux basses températures de refroidissement, typiquement 77 degrés Kelvin.

## Revendications

1. Système de détection d'impulsion laser, comportant des premiers moyens permettant de signaler la présence de l'impulsion laser et des deuxièmes moyens permettant de détecter l'image de l'impulsion laser, les deuxièmes moyens comportant au moins une cellule de détection, le système étant caractérisé en ce :
- que la cellule comporte une séquence de trois blocs (1,2,3) pouvant être découplés les uns des autres par des interrupteurs (10,20) ; le premier bloc (1) comportant un détecteur élémentaire de signal lumineux (11) associé à une mémoire tampon provisoire (12), le deuxième bloc (2) comportant une mémoire tampon (29), le troisième bloc (3) comportant un moyen de lecture (31) ; le premier interrupteur (10) reliant les premier (1) et deuxième (2) blocs, le deuxième interrupteur (20) reliant les deuxième (2) et troisième (3) blocs ; les blocs étant couplés lorsque l'interrupteur qui les relie est dans l'état fermé, étant découplés lorsque cet interrupteur est dans l'état ouvert ;
- que l'impulsion laser à détecter est un signal lumineux véhiculant de l'information, accompagné de bruit du type qui augmente avec le temps d'intégration du premier bloc (1), le temps d'intégration du premier bloc (1) étant suffisamment court pour que le rapport signal à bruit soit acceptable, mais au moins égal à la durée de l'impulsion laser;
- qu'un cycle de détection de la cellule de détection comporte plusieurs phases :
- que lors de la première phase, le premier interrupteur (10) étant déjà dans l'état ouvert, le signal lumineux reçu par le détecteur élémentaire (11) est intégré dans la mémoire tampon provisoire (12) ;
- que lors de la deuxième phase qui débute par la fermeture du premier interrupteur (10), celle-ci se produisant en cas de détection d'impulsion laser sur commande des premiers moyens ou à la fin du temps d'intégration en cas d'absence de détection d'impulsion laser, le deuxième interrupteur (20) étant déjà dans l'état ouvert, la mémoire tampon provisoire (12) vide l'information qu'elle contient dans la mémoire tampon (29), ce qui a pour effet de simultanément remettre à zéro la mémoire tampon provisoire (12), et qu'un signal lumineux, arrivant sur le détecteur élémentaire (11) pendant cette deuxième phase, s'ajoute alors directement au contenu de la mémoire tampon (29) ;
- que lors d'une troisième phase qui se produit dans le cas où une impulsion laser a été détectée par les premiers moyens et qui débute par la fermeture du deuxième interrupteur (20), le contenu de la mémoire tampon (29) est lu par le moyen de lecture (31) ;
- que lors d'une quatrième phase, intervenant après la deuxième phase ou après la troisième phase lorsque celle-ci existe, le premier interrupteur (10) étant déjà dans l'état ouvert, la mémoire tampon (29) est remise à zéro.
- que depuis l'ouverture du premier interrupteur (10), survenant entre la fin de la deuxième phase et le début de la quatrième phase, jusqu'à la fin de la première phase du cycle suivant, le signal lumineux reçu par le détecteur élémentaire (11) est intégré dans la mémoire tampon provisoire (12).

2. Système selon la revendication 1, caractérisé en ce que l'information véhiculée par le signal lumineux reçu par le détecteur élémentaire (11) produit, sous l'effet du signal lumineux, des charges électriques qui sont stockées dans les mémoires (12,29) et qui sont transférables d'un bloc à un autre par l'intermédiaire des interrupteurs (10,20).

3. Système selon l'une quelconque des revendications 1 à 2, caractérisé en ce que les charges électriques stockées dans la mémoire tampon provisoire (12) font varier le potentiel de la mémoire tampon provisoire (12), alors que les charges électriques stockées dans la mémoire tampon (29) ne font pas varier le potentiel d'entrée de la mémoire tampon (29).

4. Système selon l'une quelconque des revendications 2 à 3, caractérisé en ce que le potentiel d'entrée de la mémoire tampon (29) est une masse virtuelle.

5. Système selon l'une quelconque des revendications précédentes, caractérisé en ce que la mémoire tampon provisoire (12) est la capacité parasite située aux bornes du détecteur élémentaire (11).

6. Système selon l'une quelconque des revendications précédentes, caractérisé en ce que les deuxièmes moyens comportent une pluralité de cellules de détection, les détecteurs élémentaires (11) de ces cellules de détection étant arrangés sous la forme d'une matrice.

7. Système selon la revendication 6, caractérisé en ce que les détecteurs élémentaires (11) sont des diodes fonctionnant en mode photovoltaïque.

8. Système selon l'une quelconque des revendications précédentes, caractérisé en ce que la cellule de détection est réalisée avec un matériau adapté à la longueur d'onde de l'impulsion laser.

9. Système selon l'une quelconque des revendications précédentes, caractérisé en ce que les premiers moyens comportent un capteur auxiliaire rapide.

10. Système selon l'une quelconque des revendications précédentes, caractérisé en ce que le système est utilisé dans le domaine de l'écartométrie laser.
